# FASCICULE DE BREVET EUROPEEN

(11) **EP 1 380 779 B1**
(45) Date de publication et mention de la délivrance du brevet: **10.11.2004**
(21) Numéro de dépôt: 02077829.6
(22) Date de dépôt: 11.07.2002
(51) Int. Cl.: F16K 1/30, F16K 17/04

(54) **Clapet de pression résiduelle**
Druckbegrenzungsventil
Pressure relief valve

(43) Date de publication de la demande: 14.01.2004
(73) Titulaire: Luxembourg Patent Company S.A., 7440 Lintgen (LU)
(72) Inventeur: Kremer, Paul, 7263 Walferdange (LU); Risse, Claude, 57310 Bertrange (FR)
(74) Mandataire: Weydert, Robert

(56) Documents cités:
- EP-A- 0 863 337
- GB-A- 2 028 974
- US-A- 5 842 500
- US-A1- 2001 022 351
- US-A1- 2001 054 442

## Description

La présente invention concerne un clapet de pression résiduelle et un robinet pour un cylindre de gaz à haute pression équipé d'un tel clapet de pression résiduelle.

Le document EP-0 863 337 décrit un clapet de pression résiduelle pour robinet à gaz conforme au préambule de la revendication 1.

Le clapet de pression résiduelle sert à laisser une pression positive ou supérieure à la pression atmosphérique dans le cylindre ou la bouteille de gaz. Ce clapet est utilisé pour plusieurs raisons. La première est d'empêcher les utilisateurs de polluer la bouteille en essayant de la remplir avec un autre gaz. Dans le cadre des gaz purs ceci est extrêmement gênant. La deuxième raison est d'éviter de faire entrer dans le cylindre de l'eau ou d'autres impuretés, par exemple de la bière, notamment dans les applications CO₂ lors d'une mauvaise manipulation. Un liquide tel qu'il soit, qui est passé dans une bouteille de CO₂ pur devient un acide et oxyde la bouteille. Ceci peut être très dangereux lorsque la bouteille est percée par l'acide et que cette dernière est pleine. Le clapet de pression résiduelle assure donc le maintien d'une pression résiduelle dans le cylindre ou la bouteille de gaz par fermeture du clapet lorsque la pression dans le cylindre à gaz tombe en-dessous d'une valeur résiduelle prédéterminée. Un dispositif de remplissage est utilisé en combinaison avec le robinet ou le clapet de pression résiduelle en vue de le pousser en position ouverte pour permettre le remplissage du cylindre de gaz.

Un désavantage inhérent des clapets de pression résiduelle de la technique antérieure est l'émission d'un bruit de fonctionnement qui peut être constaté lorsque le système est opérationnel, c'est-à-dire lorsque le robinet principal est en position ouverte et le flux de gaz passe par le clapet de pression résiduelle. Il a été constaté que ce bruit peut être causé surtout en mode de soutirage par des vibrations du piston du clapet de pression résiduelle, c'est-à-dire une succession rapide de mouvements d'ouverture et de fermeture qui ne sont pas seulement gênantes à cause du bruit, mais qui sont également à l'origine d'une usure rapide des joints.

Selon la demande de brevet EP 1 120 590 A2 un clapet de pression résiduelle à ouvrir par force magnétique en vue du remplissage du cylindre ou bouteille de gaz est pourvu d'un filtre qui sert d'amortisseur pour réduire ou éliminer les vibrations.

La présente invention a pour objet de fournir un clapet pourvu d'un simple moyen pour réduire ou éliminer les vibrations précitées.

Clapet de pression résiduelle pour robinet à gaz pour cylindre de gaz pressurisé ou liquéfié, comportant un piston adapté pour mouvement dans un alésage entre une première position dans laquelle le piston engage un siège de clapet de façon étanche et une seconde position dans laquelle le piston est dégagé du siège de clapet en vue d'ouvrir un passage pour le flux du gaz, et un moyen poussant le piston vers la première position, le piston ayant une surface exposée au gaz sous pression en provenance du cylindre de gaz et orientée en vue de l'application d'une force au piston afin de le mouvoir vers la seconde position contre l'effort du moyen poussant le piston vers la première position lorsque la pression du gaz dépasse une valeur prédéterminée, et le piston ayant un passage interne et une bague d'étanchéité disposée dans une gorge annulaire formée dans une surface circonférentielle externe du piston, cette bague d'étanchéitée étant adaptée en vue d'empêcher une fuite du gaz sous pression le long de l'extérieur du piston et par son passage interne, et au moins un orifice plaçant le passage du piston en communication avec ladite gorge radialement à l'intérieur de la bague d'étanchéité pour exposer la bague d'étanchéité à la pression du gaz dans le passage du piston afin de la plaquer contre la surface interne de l'alésage et stabiliser le piston dans l'alésage.

Grâce à la présence de l'orifice communiquant avec le passage interne du piston du clapet la pression vient s'installer sur la circonférence interne de la bague d'étanchéité. De ce fait, la bague d'étanchéité est plaquée sur la surface interne du boîtier du clapet et évite ou limite fortement les vibrations.

La bague d'étanchéité exposée sur sa circonférence interne à la pression du gaz dans le passage du piston peut être un joint torique, mais elle est formée de préférence par un joint à quatre lèvres et la gorge de ce joint peut avoir un fond incliné ou une forme trapézoïdale en queue d'aronde en section transversale. La bague d'étanchéité peut aussi être formée par un joint chevron.

L'alésage dans lequel le piston du clapet de pression résiduelle est mobile peut être formé directement dans un corps de robinet qui est aussi pourvu du siège de clapet. L'alésage du corps du robinet peur être fermé par un bouchon. Dans ce mode d'exécution le clapet de pression résiduelle sert à ouvrir un passage allant de l'intérieur de la bouteille de gaz vers une valve de sortie principale lors du soutirage, mais le remplissage n'est pas effectué par ce clapet de pression résiduelle. L'alésage pour recevoir le piston peut aussi être formé dans le bouchon lui-même qui est conçu en vue d'obturer une partie contre-alésée d'un passage de fluide de gaz formé dans le corps du robinet.

Selon un autre mode d'exécution le clapet de pression résiduelle comporte une cassette ou boîtier dans lequel le piston mobile est disposé, dans ce mode d'exécution le piston peut être forcée vers sa position ouverte par la pression du gaz en provenance de la bouteille de gaz en mode de soutirage et peut être actionné par un dispositif de remplissage externe en vue du remplissage de la bouteille de gaz par le clapet de pression résiduelle. Dans ce mode d'exécution le piston sert à ouvrir et fermer un passage de flux de gaz passant par l'intérieur de la cassette ou du boîtier.

Le clapet de pression résiduelle de la technique antérieure de robinets à gaz existants peut être remplacé ou interchangé sans modifications par le clapet de pression résiduelle de la présente invention.

L'invention sera maintenant expliquée en plus grand détail en référence aux dessins annexés sur lesquels :
La figure 1 est une représentation en coupe d'un robinet pour un cylindre à gaz à haute pression, et pourvu d'un clapet de pression résiduelle selon la présente invention.
La figure 2 représente le clapet de pression résiduelle en position fermée.
La figure 3 montre le clapet de pression résiduelle en position opérationnelle ouverte.
La figure 4 est une vue en perspective du clapet de pression résiduelle.
La figure 5 montre un autre mode d'exécution de l'invention.
La figure 6 montre une bague d'étanchéité en forme d'un joint chevron.

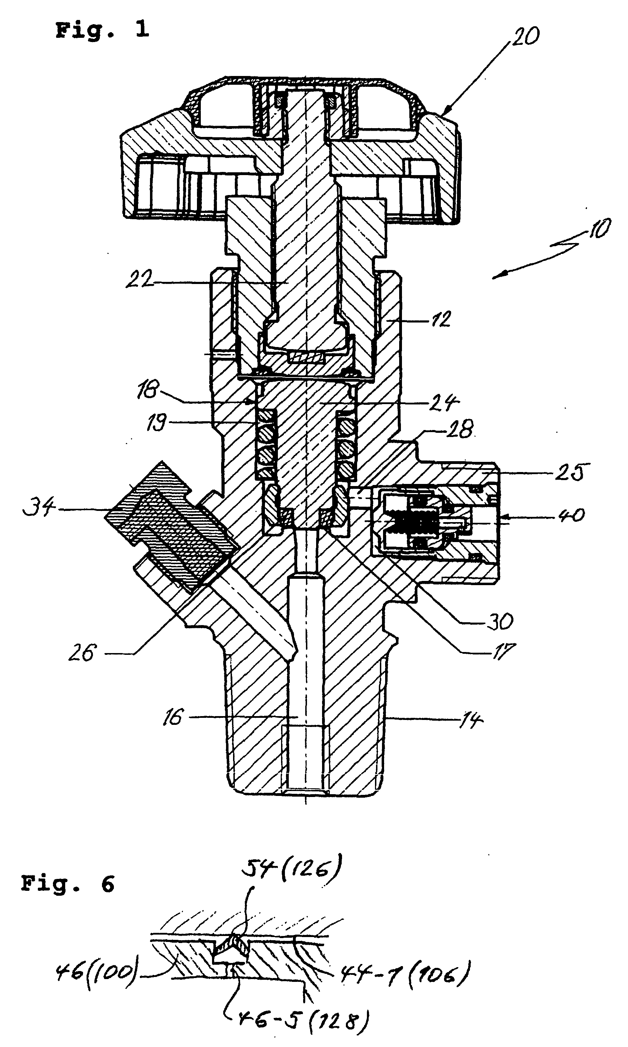

Référence est maintenant faite à la figure 1 qui montre un robinet 10 de cylindre à gaz sous haute pression ayant un corps de robinet 12 pourvu à son extrémité inférieurs une partie conique filetée 14 à visser dans une ouverture filetée du cylindre de gaz sous haute pression. La partie inférieure du corps 12 est pourvu d'un passage central longitudinal 16 qui débouche à son extrémité supérieure dans une lèvre d'étanchéité 17 située à l'extrémité inférieure d'un alésage longitudinal 19 à différents diamètres formé dans la partie supérieure du corps 12. Dans cet alésage longitudinal 19 de la partie supérieure du corps 12 est disposé un ensemble de valve principale 18 pourvue d'un organe de manoeuvre externe 20. L'ensemble de valve principale 18 comporte une tige de commande 22 en plusieurs pièces, dont la pièce inférieure 24 porte une bague d'étanchéité 26 coopérant avec la lèvre 17. Le corps 12 du robinet 10 a un raccord latéral 25 dont la surface externe est filetée. Ce raccord latéral 25 a un alésage interne 30 qui communique au moyen d'un orifice 28 avec l'alésage 19 de la partie supérieure du corps 12 au-dessus de la lèvre 17. Lorsque la bague d'étanchéité 26 est dégagée de la lèvre 17 le passage 16 est en communication avec l'alésage latéral 30 par l'alésage longitudinal 19 formé dans la partie supérieure du corps 12 et par l'orifice 28. L'ensemble de valve principale 18 sert pour ouvrir et fermer un passage traversant le corps 12 du robinet 10 et comportant le passage 16, le passage 19, l'orifice 28 et l'alésage 30. Un dispositif de sûreté 34 actionné thermiquement est monté dans un autre passage oblique latéral du corps du robinet 12 et comporte une matière qui fusionne lorsque le cylindre est exposé à une température anormalement élevée.

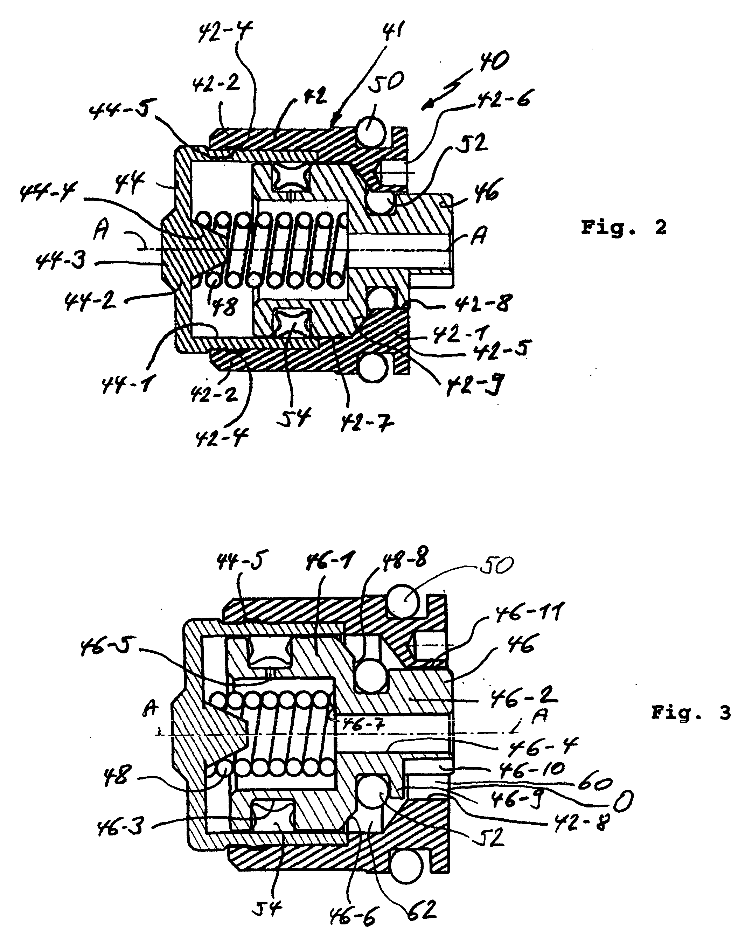

Dans l'alésage latéral 30 est disposé un clapet de pression résiduelle 40 qui sera maintenant expliqué en plus grand détail en référence aux figures 2 à 4.

Le clapet de pression résiduelle 30 comporte un boîtier 41 ou une cassette ayant une pièce externe 42 et une pièce interne 44 emboîtées axialement l'une dans l'autre, un piston de clapet mobile 46, un ressort de compression 38 et plusieurs bagues d'étanchéité 50, 52 et 54.

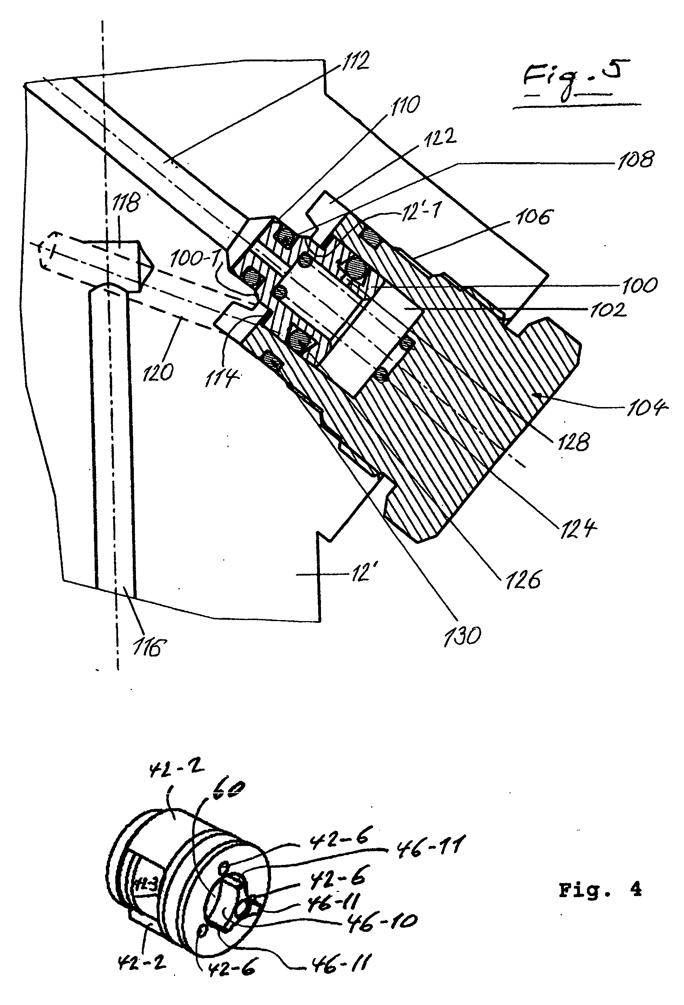

La pièce externe 42 du boîtier 41 a une partie annulaire 42-1 s'étendant autour de l'axe longitudinal A-A du clapet 40. Sur l'une des extrémités axiales de cette partie annulaire 42-1 se trouvent deux bras courbes 42-2 parallèles à l'axe A-A alors que l'autre extrémité axiale opposée de la partie annulaire a une surface d'extrémité radiale 42-5 formant l'une des extrémités axiales du boîtier 41. Les bras 42-2 sont diamétralement opposés l'un de l'autre en vue de former des ouvertures ou fenêtres 42-3 entre les bras 42-2, tel que représenté sur la figure 4, sur laquelle les deux bras 42-2 opposés sont visibles et une ouverture ou fenêtre 42-3 est visible entre ces deux bras 42-2. Il est entendu qu'une ouverture ou fenêtre pareille se trouve sur l'autre côté, non-visible, du clapet de pression résiduelle 40. Chaque bras 42-2 est pourvu sur sa surface courbe interne à proximité de son extrémité libre d'une rainure 42-4 s'étendant en direction circonférentielle. Plus que deux bras et deux fenêtres pourraient être prévus dans un autre mode d'exécution.

La pièce interne 44 du boîtier 41 du clapet 40 a une paroi cylindrique 44-1 ouverte à l'une de ses extrémités et ayant à l'autre extrémité une paroi radiale 44-2 pourvue sur sa surface externe d'une saillie d'écartement 44-3 qui vient buter contre la surface de fond de l'alésage latéral 30 lorsque le clapet de pression résiduelle 40 est installé dans cet alésage latéral 30. La paroi radiale 44-2 a sur sa surface interne 44-4 une projection de centrage 44-4 du ressort 48.

La paroi cylindrique 44-1 est pourvue sur sa surface externe d'une nervure circonférentielle 44-5 qui est reçue dans les rainures 42-4 des bras 42-2 lorsque les deux pièces 42 et 44 du boîtier 41 sont emboîtées l'une dans l'autre. Lorsque les pièces 42 et 44 sont emboîtées, elles délimitent l'intérieur du boîtier 41 et la partie annulaire 42-1 de la première partie 12 se trouve à l'une des extrémités axiales du boîtier 41 alors que la paroi radiale 44-2 de l'autre pièce 44 du boîtier 41 se trouve à l'autre extrémité axiale du boîtier 41 et ferme le boîtier 41 à cette autre extrémité.

La partie annulaire 42-1 de la première partie 42 du boîtier 41 du clapet 40 a sur sa surface externe une rainure annulaire dans laquelle est disposée un joint d'étanchéité torique 50 qui engage de façon étanche la surface circonférentielle interne de l'alésage latéral 30 lorsque le clapet de pression résiduelle 40 est installé dans cet alésage. Les deux bras 42-2 sont pourvus sur leur circonférence externe d'un filetage, non-représenté, qui engage un filetage correspondant formé dans l'alésage latéral 30 lorsque le clapet 40 est introduit dans cet alésage 30. La surface d'extrémité radiale 42-5 de la partie annulaire 42 1 est pourvue de trous borgnes 42-6 écartés circonférentiellement l'un de l'autre et qui peuvent être engagés par un outil de montage pour l'installation du clapet de pression résiduelle 40 dans l'alésage latéral 30.

Lorsque le clapet de pression résiduelle 40 est installé dans l'alésage radial la saillie 44-3 est en contact avec le fond de l'alésage 30 et un écartement annulaire est formé entre la paroi radiale 44-2 et le fond de l'alésage 30. En outre le diamètre externe de la pièce interne 44 du boîtier 41 est plus petit que le diamètre externe de la pièce externe 42 du boîtier 41 de sorte que l'orifice 28 du corps 12 du robinet 10 soit en communication permanente avec les ouvertures ou fenêtres 42-3 par l'alésage latéral 30.

La partie annulaire 42-1 de la pièce externe 42 du clapet de pression résiduelle 40 comporte à l'intérieur une première surface cylindrique 42-7 à grand diamètre et une seconde surface 42-8 à plus petit diamètre qui délimite une ouverture O débouchant dans la surface d'extrémité 42-5 et communiquant avec l'extérieur du clapet 40 et l'extérieur du corps du robinet 10 lorsque le clapet 40 est monté dans le corps du robinet 10. Une surface de butée fixe conique 42-9 est formée entre les surfaces 42-7 et 42-8. La surface 42-8 sert de surface de guidage et d'étanchéité, comme sera décrit en plus grand détail ci-après.

Le piston 46 du clapet 40 comporte une partie à grand diamètre 46-1 et une partie à petit diamètre 46-2. Une gorge annulaire 46-3 est formée dans la partie à grand diamètre 46-3 et cette gorge renferme la bague d'étanchéité 54 formée par un joint ayant en coupe transversale une forme à quatre côtés concaves et quatre lèvres entre les côtés concaves. Le piston 46 est traversé totalement par un passage central axial 46-4 qui débouche dans les surfaces d'extrémité opposées du piston 46 et qui est en communication avec l'extérieur du boîtier 41 et avec l'extérieur du corps 12 du robinet 10 lorsque le clapet 40 est monté dans le corps 12 du robinet 10. Au moins un orifice 46-5 ou plusieurs de ces orifices 46-5 écartés circonférentiellement l'un de l'autre placent le passage central axial 46-4 en communication avec la rainure 46-3 du joint d'étanchéité 54. Ce joint d'étanchéité 54 est en contact permanent avec la surface interne de la paroi cylindrique 44-1 de la pièce interne 44 du boîtier 41 du clapet 40 et empêche la fuite du gaz des fenêtres 42-3 autour du piston 46 et par le passage central 46-4 du piston 46 lorsque le clapet 40 est fermé.

Entre la partie à grand diamètre 46-1 et la partie à petit diamètre 46-2 se trouve une surface de butée conique 46-6 qui limite le mouvement de fermeture du piston 46 en coopération avec la surface de butée fixe 42-9.

Le ressort de compression 48 s'appuie de l'un côté sur la surface interne de la paroi radiale 44-2 de la pièce interne 44 du boîtier 41 du clapet 40 autour de la saillie de centrage 44-4 et s'appuie de l'autre côté sur une surface radiale 46-7 formée entre deux parties à diamètres différents du passage central interne 46-4 du piston 46. Ce ressort de compression 48 agit en vue de pousser le piston 46 en position fermée dans laquelle les surfaces de butée coniques 42-9 et 46-6 sont en engagement l'une avec l'autre. Entre la surface conique 46-6 du piston 46 et sa partie à petit diamètre 46-2 se trouve une rainure circonférentielle 46-8 dans laquelle est disposée l'anneau d'étanchéité 52 formée par un joint torique. Dans la position fermée du clapet ce joint torique 52 est en engagement étanche avec la surface de guidage et d'étanchéité 42-8 de la pièce interne du boîtier 41 du clapet 40, comme représenté en figure 2, alors que dans la position ouverte du clapet 40 le joint torique 52 est écarté axialement et dégagé de cette surface d'étanchéité et de guidage 42-8.

La partie à petit diamètre 46-2 du piston 46 a près de la rainure 46-8 du joint torique 52 une partie circulaire 46-9 à faible dimension axiale. Le reste de la partie à petit diamètre 46-2 s'étendant de cette partie circulaire 46-9 vers l'extrémité libre de la partie à petit diamètre 46-2 à une forme polygonale, de préférence triangulaire, tel que représenté en figure 4, avec des côtés concaves 46-10. La forme polygonale a entre les côtés concaves 46-10 des petites surfaces de guidage 46-11 en arc de cercle en vue de centrer le piston 46 dans la surface de guidage 42-8 du boîtier 41 du clapet 40 dans la position ouverte du clapet représentée en figure 3. Dans la position fermée du clapet 40 le piston 46 est centré dans l'ouverture 42-8 par la partie circulaire 46-9 de la partie à petit diamètre 46-2, voir la figure 2. Dans cette position fermée du clapet 40 la partie polygonale triangulaire de la partie à petit diamètre 46-2 se trouve à l'extérieur du boîtier 41 du clapet 40 et l'extrémité de la partie circulaire 46-9 est à fleur avec la paroi d'extrémité de la partie annulaire 42-1 de la pièce interne 42 du boîtier41 du clapet 40.

Le clapet de pression résiduelle de la figure 1 comporte une partie externe plus longue du boîtier de sorte que le piston soit situé totalement à l'intérieur du boîtier dans la position fermée et aussi dans la position ouverte.

La forme triangulaire de l'extrémité libre de la partie à petit diamètre 46-2 du piston 46 est obtenue par trois encoches 60 formées dans cette partie à petit diamètre 46-2 qui sont en partie délimitées par des côtés concaves 46-10. Une autre forme de l'extrémité libre de la partie à petit diamètre 46-2 pourrait être prévue ayant un nombre inférieur ou supérieur d'encoches 60. Dans la position ouverte du piston 46 la partie circulaire 46-9 de la partie à petit diamètre est espacée axialement vers l'intérieur du boîtier de la surface de centrage et d'étanchéité 42-8 et les encoches 60 sont maintenant en communication avec un espace annulaire interne 62 du boîtier 41 entourant le piston 46 et qui est en partie délimité par la surface conique 46-6 du piston 46. Cet espace annulaire 62 est aussi en communication avec les ouvertures 42-3 formées entre les bras 42-2 de la pièce externe 42 du boîtier 41.

Pour assembler le clapet 40, le piston 46 est placé dans la pièce externe 42 du boîtier 41 et ensuite la pièce interne 44 du boîtier 41 est emboîtée dans la pièce externe 42. Lors de cet assemblage les bras 42-2 sont fléchis vers l'extérieur lorsque les extrémités libres des bras 42-2 viennent en contact avec la nervure circonférentielle 44-5 et les bras reviennent vers l'intérieur au moment où la nervure 44-5 s'engage dans les rainures 42-2 des bras flexibles 42-2 en vue de retenir les deux moitiés 42, 44 du boîtier en position assemblée.

Lorsque le robinet principal 18 est ouvert, les gaz sous pression passent du cylindre de gaz sous haute pression par l'alésage 16 du corps 12 du robinet 10 l'orifice 28, l'alésage latéral 30 et les fenêtres ou ouvertures 42-3 pour pénétrer dans le clapet fermé 40, représenté en figure 2, entre les joints d'étanchéité 50 et 54 autour du piston 46 en vue d'appliquer une force d'ouverture à la surface conique 46-6 du piston 46 du clapet 40. Si la pression du gaz est suffisamment élevée pour appliquer une force d'ouverture au piston pour vaincre la force de fermeture appliquée par le ressort 48, le piston 46 est forcé en position ouverte, comprimant le ressort 48, tel que représenté en figure 3. Dans cette position ouverte, représentée en figure 3, la cavité annulaire interne 62 du clapet 40, entourant le piston 46, est en communication avec les passages d'écoulement formés par les encoches 60 et le gaz comprimé peut sortir du robinet 10 par le clapet de pression résiduelle 40 et s'écouler par un détendeur (non-représenté) attaché au raccord latéral du corps 12 du robinet 10.

Lorsque la pression de gaz pressurisé dans le cylindre tombe en-dessous d'une valeur résiduelle prédéterminée la force appliquée par le gaz pressurisé à la surface conique 46-6 du piston 46 n'est plus suffisante pour vaincre la force de fermeture du ressort 48 et le piston 46 est ramené par l'effet du ressort 48 vers sa position fermée représentée en figure 2.

Pour pouvoir remplir le cylindre ou la bouteille un ensemble de remplissage (non-représenté) est fixé au moyen d'un adaptateur (non-représenté) au corps 12 du robinet 10. Cet ensemble de remplissage force le piston 46 du clapet 40 vers la position ouverte de la figure 3, de sorte que le gaz pressurisé puisse passer en sens opposé par les encoches 60, la cavité interne 62 et les ouvertures ou fenêtres 42-3 vers l'intérieur de l'alésage 30 et ensuite par l'orifice 28 et le passage 16 vers le cylindre ou la bouteille. Il est entendu que le gaz sous pression peut sortir du cylindre ou de la bouteille, ou peut être rempli dans celle-ci seulement lorsque le robinet principal 18 est en position ouverte.

Le passage central interne 46-4 du piston 46 est en communication par l'orifice 46-5 avec la gorge circonférentielle 46-3 du joint d'étanchéité 54 et en fonctionnement le gaz sous pression peut pénétrer par cet orifice 46-5 du passage central 46-5 dans cette gorge 46-3 du joint d'étanchéité.

Par le gaz sous pression admis dans la gorge 46-3 le joint d'étanchéité 54 est plaqué contre la surface interne de la paroi cylindrique 44-1 de la pièce interne 44 du boîtier 41 est les lèvres du joint d'étanchéité 54 sont forcées en engagement avec les parois latérales de la gorge 46-3 en vue de stabiliser le piston 46 dans le boîtier ce qui réduit ou élimine les vibrations et réduit le bruit constaté lors du fonctionnement des clapets de pression résiduelle de la technique antérieure.

La figure 5 représente un autre mode d'exécution de l'invention selon lequel le piston 100 est mobile dans un alésage 102 d'un bouchon 104 obturant un contre-alésage 106 formé dans le corps de robinet 12'. Le clapet de pression résiduelle selon le mode d'exécution de la figure 5 permet le flux du gaz de l'intérieur de la bouteille de gaz par une valve de sortie principale (non-représentée) lorsqu'elle est ouverte, mais le remplissage ne se faisant pas par ce clapet de pression résiduelle. Les encoches formées dans la partie à petit diamètre du piston 46 du mode d'exécution selon les figures 1 à 4 sont supprimées. La partie à petit diamètre du piston 100 est pourvue d'un anneau d'étanchéité, de préférence un joint torique 108 qui est engagé dans une partie à plus grand diamètre 110 du passage 112 allant dans le corps du robinet 12' du clapet de pression résiduelle vers la valve de sortie principale (non-représentée). Le piston 100 a aussi une surface de butée conique 100-1 qui vient en engagement avec une autre surface de butée conique 12'-1 du corps du robinet 12' dans la position fermée du clapet ainsi qu'une surface 114 exposée à la pression du gaz dans la bouteille de gaz par les passages 116, 118 et 120 formés dans le corps du robinet 12' et raccordés à une chambre 122 délimitée par le corps du robinet 12', le bouchon 104 et le piston 100. Le ressort 124 pousse le piston 100 en position fermée et comme dans le mode d'exécution des figures 1 à 4 une bague d'étanchéité 126 est disposée dans une gorge annulaire du piston 100 mais la rainure a une forme trapézoïdale en queue d'aronde et la bague d'étanchéité est un joint torique. Au moins un orifice 128 est prévu pour l'admission de la pression du passage interne du piston 100 dans la gorge de la bague d'étanchéité 128 en-dessous de celle-ci pour la forcer vers l'extérieur et la plaquer contre la surface de l'alésage 106.

Finalement un joint d'étanchéité 130 est prévue dans une rainure annulaire du bouchon 104 qui est montée par un engagement vissé dans le corps du robinet 12'.

Tel que représenté en figure 6, le joint à quatre lèvres 54 du mode d'exécution selon les figures 1 à 4 peut être remplacé par un joint chevron.

## Revendications

1. Clapet de pression résiduelle pour robinet à gaz pour cylindre de gaz pressurisé ou liquéfié, comportant un piston (46) adapté pour mouvement dans un alésage (30) entre une première position dans laquelle le piston (46) engage un siège de clapet de façon étanche et une seconde position dans laquelle le piston (46) est dégagé du siège de clapet en vue d'ouvrir un passage pour le flux du gaz, et un moyen (48) poussant le piston (46) vers la première position, le piston (46) ayant une surface exposée au gaz sous pression en provenance du cylindre de gaz et orientée en vue de l'application d'une force au piston (46) par le gaz sous pression afin de le mouvoir vers la seconde position contre l'effort du moyen poussant le piston vers la première position lorsque la pression du gaz dépasse une valeur prédéterminée, et le piston (46) ayant un passage interne (46-4) et une bague d'étanchéité (54) disposée dans une gorge annulaire (46-3) formée dans une surface circonférentielle externe du piston (46), cette bague d'étanchéitée (54) étant adaptée en vue d'empêcher une fuite du gaz sous pression le long de l'extérieur du piston et par son passage interne (46-4), **caractérisé par** au moins un orifice (46-5) plaçant le passage du piston (46) en communication avec ladite gorge (46-3) radialement à l'intérieur de la bague d'étanchéité (54) pour exposer la bague d'étanchéité (54) à la pression du gaz dans le passage du piston (46) afin de la plaquer contre la surface interne de l'alésage (30) et stabiliser le piston (46) dans l'alésage (30).

2. Clapet selon la revendication 1, **caractérisé en ce que** la bague d'étanchéité (54) est un joint torique.

3. Clapet selon la revendication 1, **caractérisé en ce que** la bague d'étanchéité (54) est un joint à quatre lèvres.

4. Clapet selon la revendication 1, **caractérisé en ce que** la bague d'étanchéité (54) est un joint chevron.

5. Clapet selon l'une quelconque des revendications 1 à 4, **caractérisé en ce que** la gorge annulaire (46-3) a un fond conique.

6. Clapet selon l'une quelconque des revendications 1 à 5, **caractérisé en ce que** la gorge annulaire (46-3) a une forme trapézoïdale en queue d'aronde.

7. Clapet selon l'une des revendications précédentes **caractérisé en ce que** l'alésage (30) est formé dans un bouchon conçu en vue d'obturer une partie contre-alésée d'un passage de flux de gaz d'un corps de robinet, ce passage étant aussi pourvu du siège de clapet.

8. Clapet selon l'une des revendications précédentes **caractérisé en ce que** l'alésage (30) est formé dans une cassette (42, 44) conçue en vue d'être disposée dans une partie contre-alésée d'un passage de flux de gaz d'un corps de robinet, cette cassette (42, 44) étant pourvue du siège de clapet.

9. Clapet selon la revendication 8, **caractérisé en ce que** la cassette et le piston (46) sont conçus pour ouvrir et fermer un passage de soutirage/remplissage passant par l'intérieur de la cassette (42, 44).

10. Clapet selon la revendication 8 ou 9, **caractérisé en ce que** la cassette (42, 44) est pourvue à l'une de ses extrémités d'une ouverture obturée par le piston (46) se trouvant dans sa première position, et comporte au moins un passage formé dans la paroi circonférentielle de la cassette (42, 44), ce passage étant en communication par l'intérieur de la cassette (42, 44) avec ladite ouverture si le piston (46) se trouve dans sa seconde position

11. Robinet à gaz pour cylindre de gaz pressurisé ou liquéfié comportant un corps de robinet (12), un ensemble de valve principale pour ouvrir et fermer le robinet (12), et un clapet de pression résiduelle (40) empêchant le soutirage de gaz du cylindre de gaz lorsque la pression dans le cylindre tombe en-dessous d'une valeur prédéterminée, ce clapet de pression résiduelle comportant un piston (46) adapté pour mouvement dans un alésage (30) entre une première position dans laquelle le piston (46) engage un siège de clapet de façon étanche et une seconde position dans laquelle le piston (46) est dégagé du siège de clapet en vue d'ouvrir un passage pour le flux du gaz, et un moyen (48) poussant le piston (46) vers la première position, le piston (46) ayant une surface exposée au gaz sous pression en provenance du cylindre de gaz et orientée en vue de l'application d'une force au piston (46) par le gaz sous pression afin de le mouvoir vers la seconde position contre l'effort du moyen poussant le piston vers la première position lorsque la pression du gaz dépasse une valeur prédéterminée, et le piston (46) ayant un passage interne et une bague d'étanchéite (54) disposée dans une gorge annulaire (46-3) formée dans une surface circonférentielle externe du piston (46), cette bague d'étanchéité (54) étant adaptée en vue d'empêcher une fuite du gaz sous pression le long de l'extérieur du piston et par son passage interne (46-4), **caractérisé par** au moins un orifice (46-5) plaçant le passage du piston (46) en communication avec ladite gorge (46-3) radialement à l'intérieur de la bague d'étanchéité pour exposer la bague d'étanchéité (54) à la pression du gaz dans le passage du piston (46) afin de la plaquer contre la surface interne de l'alésage (30) et stabiliser le piston (46) dans l'alésage (30).

12. Robinet selon la revendication 11, **caractérisé en ce que** la bague d'étanchéité (54) est un joint torique.

13. Robinet selon la revendication 1, **caractérisé en ce que** la bague d'étanchéité (54) est un joint à quatre lèvres.

14. Robinet selon la revendication 11, **caractérisé en ce que** la bague d'étanchéité (54) est un joint chevron.

15. Robinet selon l'une quelconque des revendications 11 à 14, **caractérisé en ce que** la gorge annulaire (46-3) a un fond conique.

16. Robinet selon l'une quelconque des revendications 11 à 15, **caractérisé en ce que** la gorge annulaire (46-3) a une forme trapézoïdale en queue d'aronde.

17. Robinet selon l'une des revendications 11 à 16 **caractérisé en ce que** l'alésage (30) est formé dans un bouchon conçu en vue d'obturer une partie contre-alésée d'un passage de flux de gaz formé dans le corps de robinet, ce passage étant aussi pourvu du siège de clapet.

18. Robinet selon l'une des revendications 11 à 17 **caractérisé en ce que** l'alésage (30) est formé dans une cassette (42, 44) conçue en vue d'être disposée dans une partie contre-alésée d'un passage de flux de gaz formé dans le corps de robinet, cette cassette (42, 44) étant pourvue du siège de clapet.

19. Robinet selon la revendication 18, **caractérisé en ce que** la cassette et le piston (46) sont conçus pour ouvrir et fermer un passage de soutirage/remplissage passant par l'intérieur de la cassette (42, 44).

20. Robinet selon la revendication 18 ou 19, **caractérisé en ce que** la cassette (42, 44) est pourvue à l'une de ses extrémités d'une ouverture obturée par le piston (46) se trouvant dans sa première position, et comporte au moins un passage formé dans la paroi circonférentielle de la cassette (42, 44) et communiquant avec le passage formé dans le corps du robinet, ce passage étant en communication par l'intérieur de la cassette (42, 44) avec ladite ouverture si le piston (46) se trouve dans sa seconde position.

## Patentansprüche

1. Restdruckventil für einen Gashahn für eine Druckoder Flüssiggasflasche, mit einem Kolben (46), der angepasst ist zur Bewegung in einer Bohrung (30) zwischen einer ersten Stellung, in welcher der Kolben (46) dicht an einem Ventilsitz anliegt und einer zweiten Stellung, in welcher der Kolben (46) von dem Ventilsitz frei ist zum Öffnen eines Durchgangs für die Gasströmung, und einem Mittel (48) um den Kolben (46) in Richtung zu der ersten Stellung zu drücken, wobei der Kolben (46) eine dem Druckgas aus dem Gaszylinder ausgesetzte Fläche aufweist, die so ausgerichtet ist damit das Druckgas eine Kraft auf den Kolben (46) ausübt um den Kolben in Richtung zu der zweiten Stellung zu bewegen, entgegen der Kraft des Mittels um den Kolben in Richtung zu der ersten Stellung zu drücken, wenn der Gasdruck einen vorbestimmten Wert übersteigt, und wobei der Kolben (46) einen inneren Durchlass (46-4) aufweist sowie mit einem Dichtungsring (54) versehen ist, der sich in einer ringförmigen Nut (46-3) befindet, die in einer äusseren Umfangsfläche des Kolbens (46) geformt ist, wobei der Dichtungsring (54) angepasst ist um eine Leckage des Druckgases entlang der Aussenseite des Kolbens und durch seinen inneren Durchlass zu verhindern, **gekennzeichnet durch** mindestens eine Öffnung (46-5), die den Durchlass des Kolbens (46) in Verbindung setzt mit der Nut (46-3) radial innerhalb des Dichtungsringes (54) um den Dichtungsring (54) dem Gasdruck in dem Durchlass des Kolbens (46) auszusetzen und den Dichtungsring (54) gegen die Innenfläche der Bohrung (30) zu drücken und den Kolben (46) in der Bohrung (30) zu stabilisieren.

2. Restdruckventil nach Anspruch 1, **dadurch gekennzeichnet, dass** der Dichtungsring (54) ein O-Ring ist.

3. Restdruckventil nach Anspruch 1, **dadurch gekennzeichnet, dass** der Dichtungsring (54) ein Dichtungsring mit vier Lippen ist.

4. Restdruckventil nach Anspruch 1, **dadurch gekennzeichnet, dass** der Dichtungsring (54) ein pfeilförmiger Dichtungsring ist.

5. Restdruckventil nach einem der Ansprüche 1-4, **dadurch gekennzeichnet, dass** die ringförmige Nut (46-3) einen kegelförmigen Boden hat.

6. Restdruckventil nach einem der Ansprüche 1-5, **dadurch gekennzeichnet, dass** die ringförmige Nut (46-3) eine schwalbenschwanzförmige Trapezform aufweist.

7. Restdruckventil nach einem der vorstehenden Ansprüche, **dadurch gekennzeichnet, dass** die Bohrung (30) in einem Stopfen geformt ist, der ausgeführt ist zum Verschliessen eines versenkten Teiles eines Gasströmungskanales in einem Gashahnkörper, wobei dieser Kanal auch mit dem Sitz des Restdruckventils versehen ist.

8. Restdruckventil nach einem der vorstehenden Ansprüche, **dadurch gekennzeichnet, dass** die Bohrung (30) in einer Kassette (42, 44) geformt ist, die ausgelegt ist zur Anordnung in einem versenkten Teil eines Gasströmungskanals in einem Gashahnkörper, wobei die Kassette (42, 44) mit dem Sitz des Restdruckventils versehen ist.

9. Restdruckventil nach Anspruch 8, **dadurch gekennzeichnet, dass** die Kassette und der Kolben ausgelegt sind zum Öffnen und schliessen eines Entnahme-/Füllkanals, der durch das Innere der Kassette (42, 44) hindurchgeht.

10. Restdruckventil nach Anspruch 8 oder 9, **dadurch gekennzeichnet, dass** die Kassette (42, 44) an einem ihrer Enden eine Öffnung aufweist, die durch den Kolben (46) verschlossen ist wenn er in seiner ersten Stellung ist, und die Kassette mindestens einen Durchlass in der Umfangswand der Kassette (42, 44) aufweist, wobei dieser Durchlass durch das Innere der Kassette (42, 44) in Verbindung mit der Kassettenöffnung ist wenn der Kolben (46) sich in seiner zweiten Stellung befindet.

11. Gashahn für eine Druck- oder Flüssiggasflasche, mit einem Ventilkörper (12), einer Hauptventilbaugruppe zum Öffnen und Schliessen des Gashahns, und einem Restdruckventil (40) zum Verhindern der Gasentnahme aus der Gasflasche wenn der Druck in der Flasche unter einen vorbestimmten Wert fällt, wobei dieses Restdruckventil versehen ist mit einem Kolben (46), der angepasst ist zur Bewegung in einer Bohrung (30) zwischen einer ersten Stellung, in welcher der Kolben (46) dicht an einem Restdruckventilsitz anliegt und einer zweiten Stellung in welcher der Kolben (46) von dem Restdruckventilsitz frei ist zum Öffnen eines Durchgangs für die Gasströmung, und einem Mittel (48) um den Kolben (46) in Richtung zu der ersten Stellung zu drücken, wobei der Kolben (46) eine dem Gasdruck aus der Gasflasche ausgesetzte Fläche aufweist, die so ausgerichtet ist damit das Druckgas eine Kraft auf den Kolben (41) ausübt um den Kolben in Richtung zu der zweiten Stellung zu bewegen, entgegen der Kraft des Mittels um den Kolben in Richtung zu der ersten Stellung zu drücken, wenn der Gasdruck einen vorbestimmten Wert übersteigt, und wobei der Kolben (46) einen inneren Durchlass aufweist sowie mit einem Dichtungsring (54) versehen ist, der sich in einer ringförmigen Nut (46-3) befindet, die in einer äusseren Umfangsfläche des Kolbens (46) geformt ist, wobei der Dichtungsring (54) angepasst ist um eine Leckage des Druckgases entlang der Aussenseite des Kolbens und durch seinen inneren Durchlass zu verhindern, **gekennzeichnet durch** mindestens eine Öffnung (46-5), die den Durchlass des Kolbens (46) in Verbindung setzt mit der Nut (46-3) radial innnerhalb des Dichtungsringes um den Dichtungsring (54) dem Gasdruck in dem Durchlass des Kolbens (46) auszusetzen und den Dichtungsring gegen die Innenfläche der Bohrung (30) zu drücken und den Kolben (46) in der Bohrung (30) zu stabilisieren.

12. Gashahn nach Anspruch 11, **dadurch gekennzeichnet, dass** der Dichtungsring (54) ein O-Ring ist.

13. Gashahn nach Anspruch 11, **dadurch gekennzeichnet, dass** der Dichtungsring (54) ein Dichtungsring mit vier Lippen ist.

14. Gashahn nach Anspruch 11, **dadurch gekennzeichnet, dass** der Dichtungsring (54) ein pfeilförmiger Dichtungsring ist.

15. Gashahn nach einem der Ansprüche 11-14, **dadurch gekennzeichnet, dass** die ringförmige Nut (46-3) einen kegelförmigen Boden hat.

16. Gashahn nach einem der Ansprüche 11-15, **dadurch gekennzeichnet, dass** die ringförmige Nut eine schwalbenschwanzförmige Trapezform aufweist.

17. Gashahn nach einem der Ansprüche 11-16, **dadurch gekennzeichnet, dass** die Bohrung (30) in einem Stopfen geformt ist, der ausgeführt ist zum Verschliessen eines versenkten Teiles eines in dem Körper des Gashahns geformten Gasströmungskanales, wobei dieser Kanal auch mit dem Sitz des Restdruckventiles versehen ist.

18. Gashahn nach einem der Ansprüche 11-17, **dadurch gekennzeichnet, dass** die Bohrung (30) in einer Kassette (42, 44) geformt ist, die ausgelegt ist zur Anordnung in einem versenkten Teil eines in dem Körper des Gashahns geformten Gasströmungskanales, wobei die Kassette (42, 44) mit dem Sitz des Restdruckventiles versehen ist.

19. Gashahn nach Anspruch 18, **dadurch gekennzeichnet, dass** die Kassette und der Kolben (46) ausgelegt sind zum Öffnen und Schliessen eines Entnahme-/Füllkanals, der durch das Innere der Kassette (42, 44) hindurchgeht.

20. Gashahn nach Anspruch 18 oder 19, **dadurch gekennzeichnet, dass** die Kassette (42, 44) an einem ihrer Enden eine Öffnung aufweist, die durch den Kolben (46) verschlossen ist wenn er in seiner ersten Stellung ist, und die Kassette mindestens einen Durchlass in der Umfangswand der Kassette (42, 44) aufweist, der in Verbindung steht mit dem in dem Körper des Gashahns geformten Kanal, wobei dieser Kanal durch das Innere der Kassette (42, 44) in Verbindung steht mit der Kassettenöffnung wenn der Kolben (46) sich in seiner zweiten Stellung befindet.

## Claims

1. Residual pressure valve for a gas tap for a pressurized or liquefied gas cylinder, comprising a piston (46) adapted for movement in a bore (30) between a first position wherein the piston (46) sealingly engages a valve seat and a second position wherein the piston (46) is disengaged from the valve seat to open a passage for the gas flow, and a means (48) urging the piston (46) towards the first position, the piston (46) having a surface exposed to the gas under pressure from the gas cylinder and oriented for the application of a force to the piston (46) by the gas under pressure to move the piston towards the second position, against the force of the means urging the piston towards the first position, when the gas pressure exceeds a predetermined value, and the piston (46) having an internal passage (46-4) and a sealing ring (54) located within an annular groove (46-2) formed in an outer circumferential surface of the piston (46), said seal ring (54) being adapted to prevent leakage of gas under pressure along the exterior of the piston and through its internal passage (46-4), **characterized by** at least one orifice (46-5) placing the passage of the piston (46) in communication with said groove (46-3) radially interiorly of the sealing ring (54) to expose the sealing ring (54) to the pressure of the gas in the passage of the piston (46) so as to urge the sealing ring against the internal surface of the bore (30) and stabilize the piston (46) within the bore (30).

2. Valve according to claim 1, **characterized in that** the sealing ring (54) is an O-ring.

3. Valve according to claim 1, **characterized in that** the sealing ring (54) is a sealing ring having four lips.

4. Valve according to claim 1, **characterized in that** the sealing ring (54) is a chevron-shaped sealing ring.

5. Valve according to anyone of claims 1-4, **characterized in that** the annular groove (46-3) has a conical bottom.

6. Valve according to anyone of claims 1-5, **characterized in that** the annular groove (46-3) has a trapezoidal dovetail-shaped form.

7. Valve according to anyone of the preceding claims, **characterized in that** the bore (30) is formed in a plug adapted to close a counterbored portion of a gas flow passage of a tap body, said passage being also provided with the valve seat.

8. Valve according to anyone of the preceding claims, **characterized in that** the bore (30) is formed in a cartridge (42, 44) adapted to be disposed in a counterbored portion of a gas flow passage of a tap body, said cartridge (42, 44) being provided with the valve seat.

9. Valve according to claim 8, **characterized in that** the cartridge and the piston (46) are formed to open and close a discharge/filling passage passing through the interior of the cartridge (42, 44).

10. Valve according to claim 8 or 9, **characterized in that** the cartridge (42, 44) is provided at one of its ends with an opening closed by the piston (46) when in its first position, and comprising at least one passage formed in the circumferential wall of the cartridge (42, 44), said passage being in communication through the interior of the cartridge (42, 44) with said opening when the piston (46) is in its second position.

11. Gas tap for a pressurized or liquefied gas cylinder comprising a tap body (12), a main valve assembly to open and close the tap (12) and a residual pressure valve (40) preventing gas discharge from the gas cylinder when the pressure in the cylinder falls below a predetermined value, said residual pressure valve comprising a piston (46) adapted for movement in a bore (30) between a first position wherein the piston (46) sealingly engages the valve seat and a second position wherein the piston (46) is disengaged from the valve seat to open a passage for the gas flow, and a means (48) urging the piston (46) towards the first position, the piston (46) having a surface exposed to the gas under pressure from the gas cylinder and oriented for application of a force to the piston (46) by the gas under pressure to move the piston towards the second position, against the force of the means urging the piston towards the first position, when the gas pressure exceeds a predetermined value, and the piston (46) having an internal passage and a sealing ring (54) disposed within an annular groove (46-3) formed in an outer circumferential surface of the piston (46), said sealing ring (54) being adapted to prevent leakage of gas under pressure along the exterior of the piston and through its internal passage (46-4), **characterized by** at least one orifice (46-5) placing the passage of the piston (46) in communication with said groove (46-3) radially interiorly of the sealing ring to expose the sealing ring (54) to the pressure of the gas within the passage of the piston (46) so as to urge the sealing ring against the internal surface of the bore (30) and stabilize the piston (46) in the bore (30).

12. Tap according to claim 11, **characterized in that** the seal ring (54) is an O-ring.

13. Tap according to claim 11, **characterized in that** the sealing ring (54) is a sealing ring having four lips.

14. Tap according to claim 11, **characterized in that** the sealing ring (54) is a chevron-shaped sealing ring.

15. Tap according to anyone of claims 11-14, **characterized in that** the annular groove (46-3) has a conical bottom.

16. Tap according to anyone of claims 11-15, **characterized in that** the annular groove (46-3) has a trapezoidal dovetail-shaped form.

17. Tap according to anyone of claims 11-16, **characterized in that** the bore (30) is formed in a plug adapted to close a counterbored portion of a gas flow passage formed in the tap body, said passage being also provided with the valve seat.

18. Tap according to anyone of claims 11-17, **characterized in that** the bore (30) is formed in a cartridge (42, 44) adapted to be disposed within a counterbored portion of a gas flow passage formed in the tap body, said cartridge (42, 44) being provided with the valve seat.

19. Tap according to claim 18, **characterized in that** the cartridge and the piston (46) are adapted to open and close a discharge/filling passage passing through the interior of the cartridge (42, 44).

20. Tap according to claim 18 or 19, **characterized in that** the cartridge (42, 44) is provided at one of its ends with an opening closed by the piston (46) when in its first position, and comprising at least one passage formed in the circumferential wall of the cartridge (42, 44) and communicating with the passage formed in the tap body, said passage being in communication through the interior of the cartridge (42, 44) with said opening when the piston (46) is its second position.
